# NEUE EUROPÄISCHE PATENTSCHRIFT

(11) **EP 3 238 832 B2**
(45) Veröffentlichungstag und Bekanntmachung des Hinweises auf die Entscheidung über den Einspruch: **14.02.2024**
(45) Hinweis auf die Patenterteilung: 12.08.2020
(21) Anmeldenummer: 16167644.0
(22) Anmeldetag: 29.04.2016
(51) Int. Cl.: B05B 7/14, B05B 12/00

(54) **PULVERFÖRDERVORRICHTUNG ZUM FÖRDERN VON BESCHICHTUNGSPULVER ZU EINEM PULVERAPPLIKATOR, PULVERBESCHICHTUNGSANLAGE UND VERFAHREN ZUM BETREIBEN DER PULVERFÖRDERVORRICHTUNG**
POWDER CONVEYING DEVICE FOR CONVEYING COATING POWDER TO A POWDER APPLICATOR, POWDER COATING INSTALLATION AND METHOD FOR OPERATING THE POWDER CONVEYING DEVICE
DISPOSITIF DE TRANSPORT DESTINE A TRANSPORTER DE LA POUDRE DE REVETEMENT VERS UN APPLICATEUR DE POUDRE, INSTALLATION DE REVETEMENT DE POUDRE ET PROCEDE DE FONCTIONNEMENT D'UN DISPOSITIF DE REVETEMENT DE POUDRE

(43) Veröffentlichungstag der Anmeldung: 01.11.2017
(73) Patentinhaber: Wagner International AG, 9450 Altstätten (CH)
(72) Erfinder: Lutz, Gilbert, 9451 Kriessern (CH); Studerus, Patric, 9323 Steinach (CH)
(74) Vertreter: Nückel, Thomas

(56) Entgegenhaltungen:
- EP-A2- 0 365 038
- EP-A2- 1 454 675
- EP-A2- 1 566 352
- EP-A2- 1 772 195
- WO-A1-2014/202342
- US-A- 5 615 832

## Beschreibung

### Technisches Gebiet

Die Erfindung betrifft eine Pulverfördervorrichtung zum Fördern von Beschichtungspulver zu einem Pulverapplikator. Die Erfindung betrifft zudem eine Pulverbeschichtungsanlage und ein Verfahren zum Betreiben der Pulverfördervorrichtung. Als Pulverapplikator oder kurzum als Applikator kann zum Beispiel eine manuelle oder eine automatische Pulversprühpistole dienen.

### Stand der Technik

Aus dem Stand der Technik EP 1 454 675 A2 ist eine Pulvertransportvorrichtung bekannt. Die Vorrichtung umfasst ein Pulverreservoir mit einem Fluidisierboden und einen darunter angeordneten Anschluss für Druckluft, um das Pulver zu fluidisieren und um einen Überdruck im Pulverreservoir zu erzeugen. Der Überdruck sorgt dafür, dass das fluidisierte Pulver durch eine Pulverleitung, die durch den Deckel des Pulverreservoirs hindurch ragt, aus dem Reservoir heraus und über einen Versorgungsschlauch zu einem Applikator transportiert wird. Während des Reinigungsbetriebs kann mittels eines Trigger-Ventils an einer Stelle zwischen der Transportvorrichtung und dem Applikator Druckluft in den Versorgungsschlauch geleitet werden. Dabei ist der Druck der eingeleiteten Druckluft höher als der im Reservoir herrschende Druck. Dadurch wird der Pulverstrom im Versorgungsschlauch gestoppt und der Schlauch von Restpulver befreit. Um während des Pulver-Förderbetriebs die durch den Versorgungsschlauch strömende Pulvermenge zu steuern, kann über das TriggerVentil Triggerluft mit einem Druck, der niedriger als der im Reservoir herrschende Druck ist, in den Versorgungsschlauch geleitet werden. Dadurch wird der Pulverstrom nicht unterbrochen, sondern reduziert und zwar abhängig von der Zunahme des Gesamtwiderstands im Versorgungsschlauch.

Diese Lösung hat den Nachteil, dass der maximal mögliche Druck der Triggerluft während des Förderbetriebs kleiner als der im Pulverreservoir herrschende Druck sein muss. Andernfalls würde der Reinigungsbetrieb gestartet werden.

Ein weiterer Nachteil bei dieser Lösung ist, dass der Druck der Triggerluft sowohl die Pulvermenge als auch die Strömungsgeschwindigkeit des Pulvers beeinflusst. Wenn über die Triggerluft die Pulver-Durchflussmenge verändert wird, hat dies zwangsläufig auch eine Veränderung der Strömungsgeschwindigkeit zur Folge. Über die Triggerluft kann folglich immer nur die Pulver-Durchflussmenge zusammen mit der Strömungsgeschwindigkeit einstellt werden. Über die Triggerluft kann hingegen nicht oder nur sehr ungenau eingestellt werden, wie schnell sich die vom Applikator erzeugte Pulverwolke ausbreiten soll. Eine separate Einstellung der Strömungsgeschwindigkeit unabhängig von der Pulvermenge ist nicht möglich.

Aus dem Stand der Technik US 5,615,832 ist ein fernbedienbares Luftregelsystem für ein Pulverbeschichtungssystem bekannt. Die ferngesteuerten Luftregler des Luftregelsystems sind aus Ein-Aus-Servosteuerventilen aufgebaut und dienen zur Steuerung der Luftströme im Pneumatiksystem des Pulverbeschichtungssystems.

### Darstellung der Erfindung

Eine Aufgabe der Erfindung ist es, eine Pulverfördervorrichtung zum Fördern von Beschichtungspulver zu einem Pulverapplikator, eine Pulverbeschichtungsanlage und ein Betriebsverfahren anzugeben, bei denen die im Stand der Technik vorhandenen Nachteile vermieden werden.

Vorteilhafter Weise ist bei der erfindungsgemässen Pulverfördervorrichtung die Strömungsgeschwindigkeit des durch die Pulverleitung strömenden Pulvers beziehungsweise die Strömungsgeschwindigkeit der vom Applikator erzeugen Pulverwolke im Wesentlichen unabhängig von der geförderten Pulvermenge einstellbar. Sinngemäss das Gleiche gilt auch für die Pulverbeschichtungsanlage und das Betriebsverfahren.

Die Aufgabe wird durch eine Pulverfördervorrichtung zum Fördern von Beschichtungspulver zu einem Pulverapplikator mit den in Patentanspruch 1 angegebenen Merkmalen gelöst.

Die erfindungsgemässe Pulverfördervorrichtung zum Fördern von Beschichtungspulver zu einem Pulverapplikator umfasst einen Arbeitsbehälter, der so ausgebildet und betreibbar ist, dass er unter Druck setzbar ist. Der Arbeitsbehälter umfasst zudem einen Pulvereinlass und einen Pulverauslass, wobei der Pulverauslass mit einem Pulverauslassventil verbunden ist. Darüber hinaus ist eine Pulverleitung vorgesehen, die eingangsseitig mit dem Pulverauslassventil verbunden ist, und die eingangsseitig einen Einlass für Transportluft aufweist. Die Pulverleitung ist ausgangsseitig mit einem Pulverapplikator verbindbar. Zudem ist eine Steuerung vorgesehen, die derart ausgebildet und betreibbar ist, dass sie die zu fördernde Pulvermenge steuert, indem sie das Pulverauslassventil wiederholt öffnet und schliesst.

Darüber hinaus wird die Aufgabe durch eine Pulverbeschichtungsanlage mit den in Patentanspruch 15 angegebenen Merkmalen gelöst.

Die erfindungsgemässe Pulverbeschichtungsanlage umfasst die oben beschriebene Pulverfördervorrichtung, wobei die Pulverfördervorrichtung einerseits mit einem Pulvervorratsbehälter und andererseits mit einer oder mehreren Pulverapplikatoren verbunden ist.

Darüber hinaus wird die Aufgabe durch ein Verfahren zum Betreiben der oben beschriebenen Pulverfördervorrichtung mit den in Patentanspruch 16 angegebenen Merkmalen gelöst.

Bei dem erfindungsgemäßen Verfahren zum Betreiben der oben beschriebenen Pulverfördervorrichtung erfolgt die die Pulverförderung dadurch, dass Transportluft in die Pulverleitung geleitet wird, und dass mittels der Steuerung das Auslassventil mittels eines pulscodierten Steuersignals wiederholt geöffnet und geschlossen wird. Über das Verhältnis zwischen der Zeitdauer, in der das Auslassventil geschlossen ist und der Zeitdauer, in der das Auslassventil geöffnet ist, wird die zu fördernde Pulvermenge eingestellt.

Vorteilhafte Weiterbildungen der Erfindung ergeben sich aus den in den abhängigen Patentansprüchen angegebenen Merkmalen.

Bei einer Ausführungsform der erfindungsgemässen Pulverfördervorrichtung ist die Steuerung derart ausgebildet und betreibbar, dass sie zur Steuerung der zu fördernden Pulvermenge das Pulverauslassventil mittels einer Pulsweitenmodulation oder einer Pulsfrequenzmodulation ansteuert.

Erfindungsgemäß ist bei der Pulverfördervorrichtung ein Drucksensor vorgesehen, um den Druck im Arbeitsbehälter zu erfassen. Die Steuerung ist derart ausgebildet und betreibbar, dass sie den Druck im Arbeitsbehälter regelt.

Bei einer Weiterbildung der erfindungsgemässen Pulverfördervorrichtung ist der Einlass für Transportluft unmittelbar nach dem Pulverauslassventil vorgesehen.

Bei einer zusätzlichen Weiterbildung der erfindungsgemässen Pulverfördervorrichtung ist der Einlass für die Transportluft als Ringspalt ausgebildet. Die Transportluft mittels eines Ringspalts in die Pulverleitung einströmen zu lassen hat mehrere Vorteile. Weil die Transportluft durch den Ringspalt so in die Pulverleitung eingeleitet wird, dass sie die gleiche Richtung wie der Hauptstrom aufweist, wird dort, wo die Transportluft eingeleitet wird, eher ein Unterdruck erzeugt als ein Staudruck (kein Luftwiderstand, keine Barriere). Dadurch entstehen weniger Turbulenzen in der Pulverleitung. Zudem lässt sich der Verschleiss an der Wandung der Pulverleitung reduzieren oder sogar gänzlich vermeiden.

Bei einer anderen Weiterbildung der erfindungsgemässen Pulverfördervorrichtung ist der Einlass für Transportluft so ausgebildet, dass die Transportluft in einem spitzen Winkel in die Pulverleitung einblasbar ist.

Zudem kann bei der erfindungsgemässen Pulverfördervorrichtung eine Dosiereinrichtung für die Transportluft vorgesehen sein. Als Dosiereinrichtung kann zum Beispiel ein Luftmengenregel-Ventil dienen.

Darüber hinaus kann bei der erfindungsgemässen Pulverfördervorrichtung eine Fluidisiereinrichtung vorgesehen sein. Die Fluidisiereinrichtung ist vorzugsweise im unteren Bereich des Arbeitsbehälters angeordnet.

Es ist von Vorteil, wenn bei der erfindungsgemässen Pulverfördervorrichtung der Arbeitsbehälter einen weiteren Pulverauslass aufweist, und eine weitere Pulverleitung vorgesehen ist. Die weitere Pulverleitung ist eingangsseitig mit einem weiteren Pulverauslassventil und einem weiteren Einlass für Transportluft verbunden. Ausgangsseitig ist die weitere Pulverleitung mit einem weiteren Pulverapplikator verbindbar. Damit können mit der erfindungsgemässen Pulverfördervorrichtung mehrere Pulverapplikatoren mit Pulver versorgt werden. Zudem können die einzelnen Pulverapplikatoren unabhängig voneinander und bei Bedarf jeweils mit unterschiedlich viel Pulver versorgt werden.

Zudem ist es von Vorteil, wenn bei der erfindungsgemässen Pulverfördervorrichtung der Arbeitsbehälter ein Entlüftungsventil aufweist. Das Entlüftungsventil ist primär Teil einer Regeleinrichtung, mit der der Druck im Arbeitsbehälter geregelt werden kann. Das Entlüftungsventil kann auch als Sicherheitsventil dienen. Im Störfall kann damit vermieden werden, dass der Druck im Inneren des Arbeitsbehälters einen maximal zulässigen Grenzwert überschreitet.

Die erfindungsgemässe Pulverfördervorrichtung kann ein Ultraschallsieb aufweisen, das im Arbeitsbehälter angeordnet ist.

Es ist auch möglich, dass die erfindungsgemässe Pulverfördervorrichtung einen Zwischenbehälter aufweist, der über ein Ventil mit dem Pulvereinlass des Arbeitsbehälters verbunden ist. Mittels eines Unterdruckerzeugers kann Pulver in den Zwischenbehälter gesaugt werden. Damit kann der Arbeitsbehälter bei Bedarf permanent über den Zwischenbehälter mit Pulver versorgt werden. Auf diese Weise wird eine dauerhafte und unterbrechungsfreie Versorgung der Pulverapplikatoren ermöglicht.

Bei der erfindungsgemässen Pulverfördervorrichtung kann eine steuerbare Druckluftquelle vorgesehen sein, die mit dem Zwischenbehälter verbunden ist, und mit der der Zwischenbehälter unter Druck setzbar ist. Damit kann der Zwischenbehälter auf ein Druckniveau gebracht werden, das demjenigen des Arbeitsbehälters entspricht, sodass keine Druckdifferenz zwischen dem Arbeitsbehälter und Zwischenbehälter besteht. Dadurch kann eine Ursache für Druckschwankungen im Arbeitsbehälter eliminiert werden. Dies wiederum hat den Vorteil, dass die Druckschwankungen im Arbeitsbehälter und damit auch die Druckschwankungen beim Applikator und die Schwankungen bei der zum Applikator geförderten Pulvermenge reduziert werden können. Die Qualität des Pulverapplizierens lässt sich auf diese Weise weiter optimieren.

Bei einer Ausführungsform der erfindungsgemässen Pulverfördervorrichtung ist der Zwischenbehälter oberhalb des Arbeitsbehälters angeordnet. Dies hat den Vorteil, dass die Schwerkraft benutzt werden kann, um das Pulver in den Arbeitsbehälter zu transportieren.

Vorteilhafter Weise wird bei dem Verfahren zum Betreiben der Pulverfördervorrichtung die Transportluft während der Pulverförderung ununterbrochen in die Pulverleitung geleitet.

### Kurze Beschreibung der Zeichnungen

Im Folgenden wird die Erfindung mit mehreren Ausführungsbeispielen anhand von sieben Figuren weiter erläutert.
- Figur 1: zeigt in einem Blockdiagramm eine mögliche Ausführungsform einer Pulverbeschichtungsanlage mit der erfindungsgemässen Pulverfördervorrichtung.
- Figur 2: zeigt in einer Prinzipdarstellung eine mögliche Ausführungsform der erfindungsgemässen Pulverfördervorrichtung.
- Figur 3a: zeigt in einem Diagramm den zeitlichen Verlauf des Steuersignals für das Pulver-Auslassventil.
- Figur 3b: zeigt in einem Diagramm den zeitlichen Verlauf des eingespeisten Transportluftdrucks.
- Figur 3c: zeigt in einem Diagramm die pro Zeit geförderte Pulvermenge.
- Figur 4: zeigt eine mögliche Ausführungsform der erfindungsgemässen Pulverfördervorrichtung in einer dreidimensionalen Ansicht.
- Figur 5: zeigt die erfindungsgemässe Pulverfördervorrichtung im Längsschnitt.
- Figur 6: zeigt eine mögliche Ausführungsform eines Auslassventils im Schnitt.
- Figur 7: zeigt eine mögliche Anordnung einer Haube zum Schmutzaustrag in der erfindungsgemässen Pulverfördervorrichtung.

### Wege zur Ausführung der Erfindung

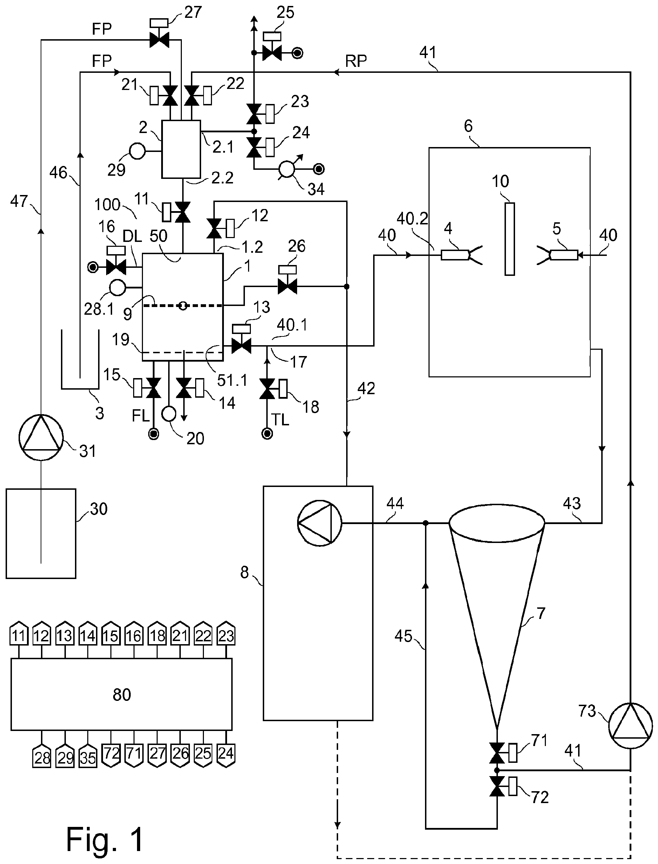

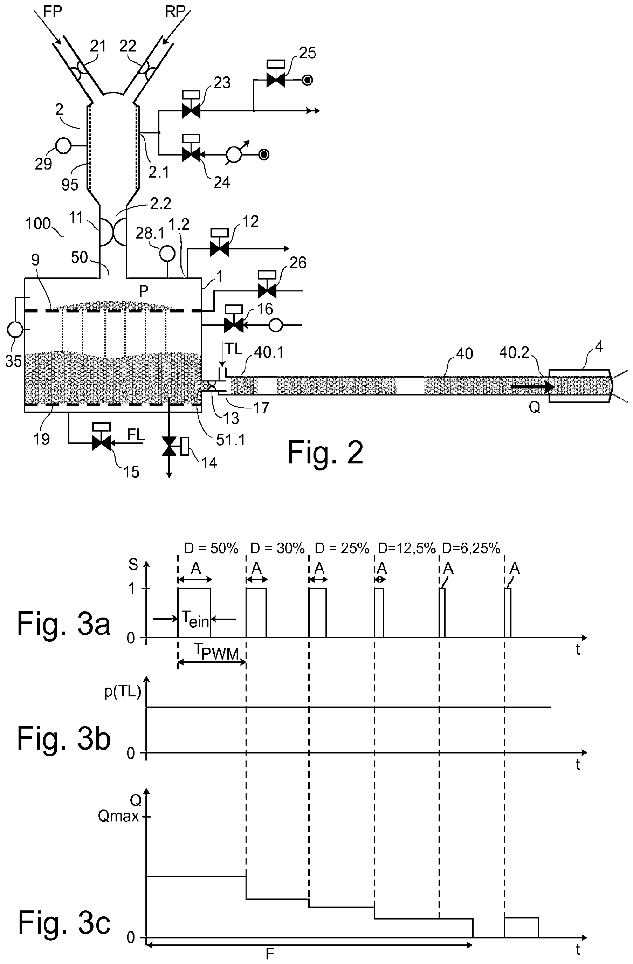

Figur 1 zeigt in einem Blockdiagramm eine mögliche Ausführungsform einer Pulverbeschichtungsanlage mit der erfindungsgemässen Pulverfördervorrichtung 100. In Figur 2 ist der prinzipielle Aufbau einer möglichen Ausführungsform der erfindungsgemässen Pulverfördervorrichtung 100 dargestellt. Die Pulverfördervorrichtung 100 zum Fördern von Beschichtungspulver zu einem Pulverapplikator 4 umfasst einen Arbeitsbehälter 1. Dieser ist druckdicht ausgebildet, damit er unter Druck gesetzt werden kann. Der maximale Arbeitsdruck im Arbeitsbehälter 1 liegt vorzugsweise unter 0,5 bar, weil dann die Europäische Druckgeräterichtlinie 97/23/EG beziehungsweise Pressure Equipment Directive 97/23/EG nicht zur Anwendung kommen muss und folglich geringere technische Anforderungen an den Aufbau des Arbeitsbehälters 1 gestellt werden.

In einer Ausführungsform umfasst der Arbeitsbehälter 1 einen Pulvereinlass 50, der auch kurzum als Einlass bezeichnet wird, und einen Pulverauslass 51.1, der auch kurzum als Auslass bezeichnet wird. Der Pulverauslass 51.1 ist mit einem Pulverauslassventil 13 verbunden. Darüber hinaus ist eine Pulverleitung 40 vorgesehen, die an ihrem eingangsseitigen Endbereich 40.1 mit dem Pulverauslassventil 13 verbunden ist. Im Folgenden bezeichnet der Begriff eingangsseitig den eingangsseitigen Endbereich 40.1 der Pulverleitung 40, der sich auf der stromaufwärtigen Seite der Pulverleitung 40 befindet.

Die Pulverleitung 40 weist eingangsseitig zusätzlich zum Anschluss für den Auslass des Pulverauslassventils 13 auch einen Einlass 17 für Transportluft TL auf. In Figur 1 ist die Pulverleitung 40 ausgangsseitig mit einem Pulverapplikator 4 verbunden. Im Folgenden bezeichnet der Begriff ausgangsseitig den ausgangsseitigen Endbereich 40.2 der Pulverleitung 40, der sich auf der stromabwärtigen Seite der Pulverleitung 40 befindet.

Der Pulverauslass 51.1 befindet sich vorzugsweise im unteren Bereich des Arbeitsbehälters 1. Dies hat den Vorteil, dass das gesamte Pulver ohne weiteres aus dem Arbeitsbehälter 1 heraustransportiert werden kann. Im unteren Bereich des Arbeitsbehälters 1 befindet sich auch eine Fluidisiereinrichtung 19, mit der das im Arbeitsbehälter 1 befindliche Pulver fluidisiert werden kann. Die Fluidisiereinrichtung 19 weist eine vorzugsweise horizontal verlaufende Trennwand aus einem porösem Material auf, das zum Beispiel ein semipermeables, für Luft durchlässiges Material sein kann. Das oberhalb der porösen Trennwand befindliche Pulver wird mit von unten durch die poröse Trennwand hindurchgeleiteter Fluidisierluft FL aufgewirbelt und in einen Schwebezustand versetzt. Dieser Vorgang wird als fluidisieren bezeichnet. Das oberhalb der Fluidisiereinrichtung 19 befindliche fluidisierte Pulver kann dann aus dem Arbeitsbehälter 1 durch den Pulverauslass 51.1 heraustransportiert werden. Um die Fluidisierluft FL steuern zu können, ist ein Ventil 15 vorgesehen. Das Ventil 15 kann zum Beispiel als Luftmengenregel-Ventil ausgebildet sein. Zudem kann eine Rüttelvorrichtung 20, die zum Beispiel einen Rüttelmotor aufweist, am Arbeitsbehälter 1 montiert sein, um die Erzeugung eines homogenen Pulver-Luft-Gemisches zu unterstützen.

Ebenfalls im unteren Bereich des Arbeitsbehälters 1 kann ein Anschluss für ein weiteres Ventil 14 vorgesehen sein. Über das Ventil 14 kann das Restpulver, das nicht bereits über den Auslass 51.1 abtransportiert wurde, aus dem Arbeitsbehälter 1 entnommen werden.

Des Weiteren kann im Arbeitsbehälter 1 ein Sieb 9 angeordnet sein, das vorzugsweise als Ultraschall-Sieb ausgebildet ist. Das Sieb 9 teilt den Innenraum des Arbeitsbehälters 1 in eine obere Kammer und in eine untere Kammer. Mit Hilfe des Siebs 9 wird das Pulver gesiebt, das über den Pulvereinlass 50 in die obere Kammer des Arbeitsbehälter 1 gelangt ist. Dabei werden Pulverklumpen und Verunreinigungen zurückgehalten. Das gesiebte und zum Abtransport bereite Pulver befindet sich in der Kammer unterhalb des Siebs 9. Um das Sieb 9 reinigen zu können, kann es aus der Horizontale herausgeschwenkt und in eine Schräglage gebracht werden, sodass das auf dem Sieb 9 liegende Restpulver und/oder das zurückgehaltene Material vom Sieb 9 herunterrutschen kann.

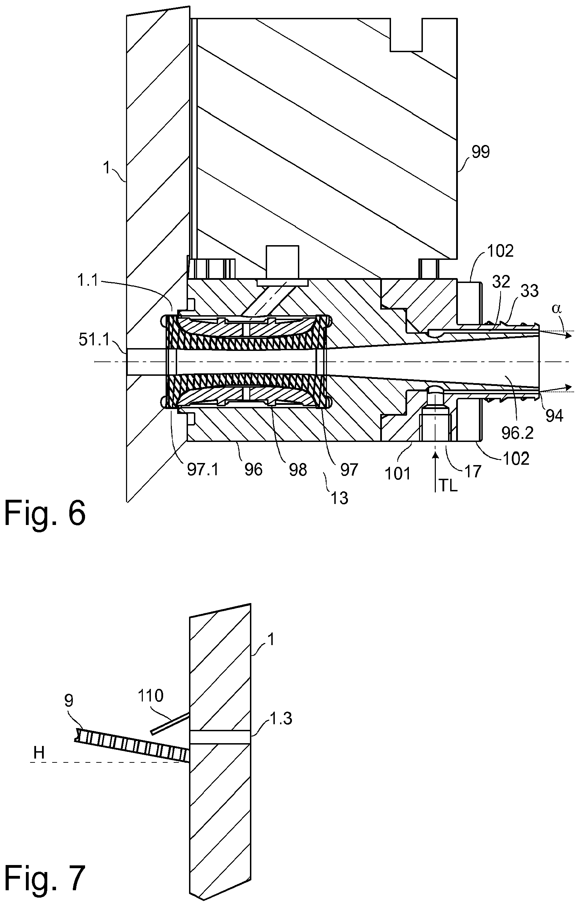

Stattdessen kann das Sieb 9 auch andauernd leicht schräg angeordnet sein, wie dies in Figur 7 gezeigt ist. Vorzugsweise beträgt der Winkel zwischen 1° und 5° und am besten 3° gegenüber der Horizontale H. Dadurch sammeln sich die Pulverklumpen und Verunreinigungen im unteren schrägen Bereich des Siebs 9 an. Über diesem Bereich kann eine Haube 110 und in der Seitenwand des Arbeitsbehälters 1 unterhalb der Haube 110 ein Reinigungsanschluss 1.3 vorgesehen sein. Die Haube 110 kann leicht schräg verlaufen. Sie bildet mit dem Sieb 9 einen Schlitz, über den Luft unter die Haube 110 gelangt und von dort über den Reinigungsanschluss 1.3 aus dem Arbeitsbehälter 1 gesaugt wird. Der Luftstrom bewirkt, dass die auf dem Sieb 9 lagernden Verunreinigungen aus dem Arbeitsbehälter 1 gesaugt beziehungsweise geblasen werden. Der Reinigungsanschluss 1.3 ist über das Ventil 26 und eine Leitung 42 mit dem Nachfilter 8 verbunden. Um das Sieb 9 zu reinigen, wird das Ventil 26 geöffnet. Der Arbeitsbehälter 1 wird dabei weiterhin mit Druckluft versorgt, um den Überdruck im Arbeitsbehälter 1 aufrecht zu erhalten. Der angesammelte Schmutz wird nun durch den weiterhin im Arbeitsbehälter 1 herrschenden Überdruck vom Sieb 9 durch die Leitung 42 zum Nachfilter 8 geblasen. Für die Zeit, in der das Ventil 26 geöffnet ist, kann es zu einem reduzierten Druck im Arbeitsbehälter 1 kommen. Die Reinigung des Siebs 9 findet deshalb vorzugsweise während einer Beschichtungspause statt, also in der Zeit, in der kein Pulver gefördert wird. Das Ventil 26 und die Leitung 42 dienen also zum Schmutzaustrag.

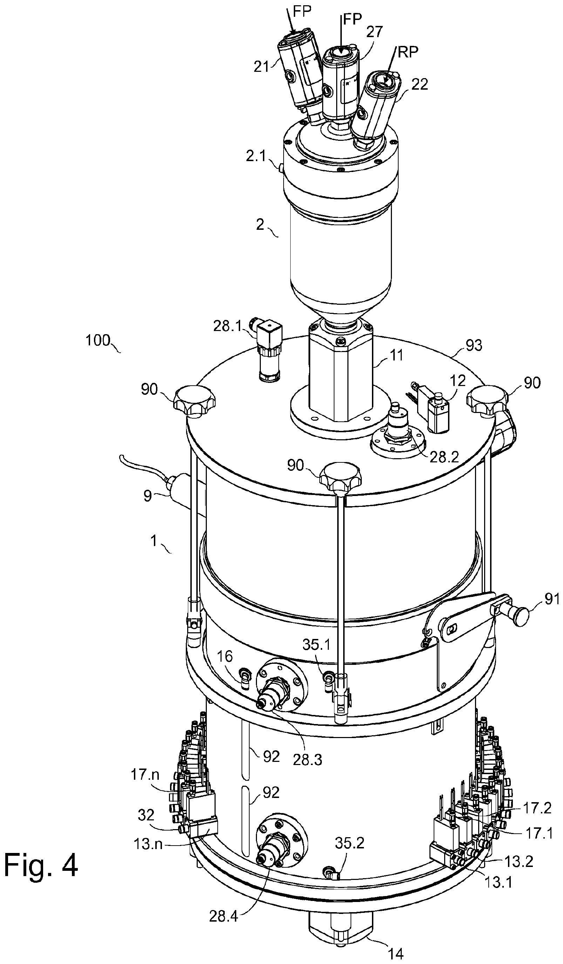

Am Arbeitsbehälter 1 kann zudem ein Druckluftanschluss vorgesehen sein, der über ein Ventil 16 mit einer Druckluftquelle verbunden ist. Wenn das Ventil 16 geöffnet ist, kann Druckluft DL in den Arbeitsbehälter 1 strömen. Damit kann der Arbeitsbehälter 1 unter Druck gesetzt und der gewünschte Arbeitsdruck im Arbeitsbehälter 1 eingestellt werden. Stattdessen kann der gewünschte Arbeitsdruck im Arbeitsbehälter 1 auch über die zugeführte Fluidisierluft FL und über die Druckluft DL erzeugt werden. In der Regel reicht die Fluidisierluft FL aus, um den gewünschten Arbeitsdruck zu erzeugen. Wenn jedoch zum Beispiel sehr viele Pulverauslassventile 13 geöffnet sind, könnte es sein, dass die Fluidisierluft FL allein nicht ausreicht, um den Arbeitsdruck aufrecht zu erhalten. In diesem Fall wird zusätzlich die Druckluft DL benutzt, um den Arbeitsdruck aufrecht zu erhalten und um gegebenenfalls Druckschwankungen im Arbeitsbehälter 1 auszugleichen. Die Druckluft DL kann unabhängig von der Fluidisierluft FL zugeführt werden. Um ein gut fluidisiertes Pulver-Luft-Gemisch zu erhalten, ist es von Vorteil, wenn die Fluidisierluft FL auf einen bestimmten Wert eingestellt ist. Der Druckluftanschluss für die Druckluft DL kann zum Beispiel, wie in Figur 1 angedeutet, im oberen Bereich des Arbeitsbehälters 1 angeordnet sein. Der Druckluftanschluss kann auch einer Stelle des Arbeitsbehälters 1 angebracht sein, die es ermöglicht, dass mit der Druckluft DL die Sichtfenster 92 (Fig. 4) vom anhafteten Pulver freigeblasen werden können. Die Druckluft DL kann auch verwendet werden, um Druckluftverluste, die durch kleinere Leckagen entstehen, zu kompensieren. Darüber hinaus kann der Arbeitsbehälter 1 einen Entlüftungsanschluss 1.2 aufweisen, der mit einem Ventil 12 verbunden ist, das als Entlüftungsventil dient. Über das Ventil 12 kann der Entlüftungsanschluss 1.2 zum Beispiel mit einem Nachfilter 8 verbunden sein. Der Entlüftungsanschluss 1.2 und das Ventil 12 können auch dazu dienen sicherzustellen, dass der Druck im Arbeitsbehälter 1 einen bestimmten maximalen Druck nicht überschreitet. Zudem können der Entlüftungsanschluss 1.2 und das Ventil 12 benutzt werden, um den Arbeitsdruck im Arbeitsbehälter 1 konstant zu halten.

Im Folgenden wird ein mögliches Verfahren zur Entlüftung beschrieben. Bei Überschreitung eines bestimmten maximalen Drucks Pmax sorgt die Steuerung 80 dafür, dass das Entlüftungsventil 12 für eine bestimmte kurze Zeitdauer T1 (Öffnungszeitdauer) öffnet und für eine Zeitdauer T2 (Schliesszeitdauer) schliesst. Der Druck im Arbeitsbehälter 1 wird mittels eines Drucksensors 28.1 gemessen und wenn festgestellt wird, dass der Druck nach wie vor zu gross ist, wird das Ventil 12 wieder kurzzeitig geöffnet. Dabei kann vorgesehen sein, dass nun die Öffnungszeitdauer T1 und die Schliesszeitdauer T2 etwas grösser gewählt werden. Dieser Vorgang wird solange wiederholt bis der Druck im Arbeitsbehälter 1 wieder unter dem maximalen Druck Pmax liegt. Mit jeder Wiederholung können die Öffnungszeitdauer T1 und die Schliesszeitdauer T2 etwas grösser gewählt werden, und zwar so lange bis die Öffnungszeitdauer T1 und die Schliesszeitdauer T2 einen bestimmten Wert Tsoll = T1 + T2 erreicht haben. Sollten danach noch weitere Wiederholungen erfolgen, werden die Öffnungszeitdauer T1 und die Schliesszeitdauer T2 nicht mehr weiter vergrössert, sondern beibehalten. Der Wert Tsoll kann zum Beispiel 300 ms betragen.

So kann der Druckabfall im Arbeitsbehälter 1 klein gehalten werden. Zudem ist die Reaktionsdauer kurz. Liegt der Druck im Arbeitsbehälter 1 unterhalb des maximalen Druckes Pmax, bleibt das Entlüftungsventil 12 geschlossen. Darüber hinaus kann so der Verschleiss des Entlüftungsventils 12 reduziert werden, weil das Ventil nicht unnötig oft betätigt wird.

Ein alternatives Verfahren zur Entlüftung könnte wie folgt aussehen. Die Steuerung 80 steuert das Entlüftungsventil 12 mittels eines pulscodierten Steuersignals. Das pulscodierte Steuersignal kann zum Beispiel pulsweiten- oder pulsfrequenzmoduliert sein. Der Tastgrad des pulscodierten Steuersignals entspricht der Zeitdauer T, für die das Entlüftungsventil 12 geöffnet sein soll.

Wenn die Pulverfördervorrichtung 100 zur Versorgung von vielen Pulverapplikatoren 4 dient, kann es vorkommen, dass dem Arbeitsbehälter 1 eine grosse Menge Druckluft zur Aufrechterhaltung des Arbeitsdrucks zugeführt wird. Wenn nun ein erheblicher Teil oder alle Pulverapplikatoren gleichzeitig abgeschaltet werden und die Zufuhr von Fluidisierluft FL nicht unterbrochen wird, kann es sein, dass ein einzelnes Entlüftungsventil 12 nicht genügt, um einen ausreichenden Druckausgleich zu ermöglichen. Es kann also auch von Vorteil sein, mehrere der Entlüftungsventile 12 vorzusehen. Diese können wie das Entlüftungsventil 12 aufgebaut und auf die gleiche Weise angeschlossen sein wie das Entlüftungsventil 12.

Der Pulvereinlass 50 befindet sich vorzugsweise im oberen Bereich des Arbeitsbehälters 1. Er kann zum Beispiel im Deckel des Arbeitsbehälters 1 angeordnet sein. Der Pulvereinlass 50 ist über ein Pulver-Ventil 11, das beispielsweise als Quetsche ausgebildet ist, mit dem Pulverauslass 2.2 eines Zwischenbehälters 2 verbunden. Der Zwischenbehälter 2 ist in der Regel oberhalb des Arbeitsbehälters 1 angeordnet. Auf diese Weise kann die Schwerkraft ausgenutzt werden, um im Zwischenbehälter 2 befindliches Pulver nach unten in den Arbeitsbehälter 1 zu transportieren.

Bei einer Ausführungsform des Arbeitsbehälters 1 befindet sich der Pulvereinlass 50 in der Mitte des Deckels des Arbeitsbehälters 1, wie dies in Figur 2 angedeutet ist. Dies hat den Vorteil, dass das Pulver auch auf die Mitte des Siebes 9 fällt, sodass es sich besser über das gesamte Sieb 9 verteilt. Der Pulvereinlass 50 kann sich stattdessen auch seitlich am Arbeitsbehälter 1 oberhalb des Siebs 9 befinden.

Der Zwischenbehälter 2 kann auch so neben dem Arbeitsbehälter 1 angeordnet sein, dass sich der Pulverauslass 2.2 des Zwischenbehälters 2 und der Pulvereinlass 50 des Arbeitsbehälters 1 noch oberhalb des Siebes 9 befinden. Auch hier kann die Schwerkraft ausgenutzt werden, um im Zwischenbehälter 2 befindliches Pulver nach unten in den Arbeitsbehälter 1 zu transportieren.

In der in Figur 1 gezeigten Ausführungsform weist der Zwischenbehälter 2 eingangsseitig einen Pulvereinlass und ein Pulvereinlassventil 21 auf, über das Frischpulver FP in den Zwischenbehälter 2 gesaugt oder gepumpt werden kann. Zudem weist der Zwischenbehälter 2 eingangsseitig einen weiteren Pulvereinlass und ein Pulvereinlassventil 22 auf, über das rezykliertes Pulver RP in den Zwischenbehälter 2 gesaugt werden kann. Die beiden Pulvereinlassventile 21 und 22 können als Quetschen ausgebildet sein. Es ist aber auch möglich am Zwischenbehälter 2 nur einen Pulvereinlass und ein Pulvereinlassventil vorzusehen, über das dann entweder Frischpulver FP oder rezykliertes Pulver RP angesaugt oder gepumpt werden kann.

Die Versorgung des Zwischenbehälters 2 kann zum Beispiel über einen Pulvervorratsbehälter 3 und eine Pulverleitung 46 erfolgen. Stattdessen kann der Zwischenbehälter 2 auch über einen Pulvervorratsbehälter 30, eine Pulverpumpe 31 und eine Pulverleitung 47 mit Frischpulver FP versorgt werden.

Häufig ist der Pulvervorratsbehälter 30 ein sogenannter Bigbag, der auch als Flexible Intermediate Bulk Container oder kurz FIBC bezeichnet wird. Der Pulvervorratsbehälter 30 beinhaltet in der Regel grössere Pulvermengen als der Pulvervorratsbehälter 3. Auch steht der Pulvervorratsbehälter 30 in der Regel weiter vom Zwischenbehälter 2 entfernt als der Pulvervorratsbehälter 3. So kann der Pulvervorratsbehälter 30 in einem Abstand von zum Beispiel 30m zum Zwischenbehälter 2 stehen, wohingegen der Pulvervorratsbehälter 3 zum Beispiel 5m vom Zwischenbehälter 2 entfernt steht.

Beim Pulvervorratsbehälter 3 wird das Pulver über den im Zwischenbehälter 2 herrschenden Unterdruck in den Zwischenbehälter 2 gefördert. Es ist damit keine weitere Pulverfördervorrichtung notwendig und daher kostengünstig.

Wenn der Pulvervorratsbehälter 30, zum Beispiel in Form eines Bigbags, verwendet wird, werden in der Regel auch grössere Pulvermengen gefördert. Hierfür ist es von Vorteil, wenn eine zusätzliche Pulverfördervorrichtung wie zum Beispiel die Pulverpumpe 31 verwendet wird. Hier hilft der herrschende Unterdruck die Luft aus dem Zwischenbehälter 2 zu entfernen. Die überschüssige Luft im Zwischenbehälter 2 kann über die Öffnung 2.1 abgelassen werden. Somit entsteht kein Staudruck im Zwischenbehälter 2.

Es kann auch von Vorteil sein, wenn mehrere Zwischenbehälter 2 vorhanden sind, über die der Arbeitsbehälter 1 mit Pulver versorgt wird. Die Zwischenbehälter 2 können oberhalb vom Arbeitsbehälter 1 montiert sein. Bei der Verwendung von zwei Zwischenbehältern 2 können diese zum Beispiel phasenversetzt betrieben werden; während der eine Pulver ansaugt, also in der Ansaugphase arbeitet, transportiert der andere, der in der Auslassphase arbeitet, das Pulver in den Arbeitsbehälter 1. Auf diese Weise wird der Arbeitsbehälter 2 kontinuierlich mit Pulver befüllt. Damit lassen sich grosse Pulvermengen in den Arbeitsbehälter 2 fördern.

Der Zwischenbehälter 2 weist einen Anschluss 2.1 auf, über den der Zwischenbehälter 2 mit Druckluft beaufschlagt werden kann. Der Anschluss 2.1 ist dazu über ein Ventil 24 mit einer Druckluftquelle verbindbar. Das Ventil 24 bildet mit der Druckluftquelle eine steuerbare Druckluftquelle. Ein Druckregelventil 34, das zwischen der Druckluftquelle und dem Ventil 24 angeordnet sein kann, kann Teil der steuerbaren Druckluftquelle sein.

Über denselben Anschluss 2.1 kann die Druckluft auch aus dem Zwischenbehälter 2 abgelassen werden. Dazu ist der Anschluss 2.1 über ein Ventil 23 mit der Umgebung verbindbar. Über den Anschluss 2.1 kann die Druckluft aber auch aus dem Zwischenbehälter 2 abgesaugt und ein Unterdruck erzeugt werden. Dazu ist zusätzlich ein Vakuumventil 25 vorgesehen, das am Anschluss 2.1 einen Unterdruck erzeugt, wenn das Ventil 23 geöffnet ist. Das Vakuumventil 25 dient als Unterdruckerzeuger.

Grundsätzlich können die im Blockdiagramm gemäss Figur 1 dargestellten Druckluftquellen geregelte Druckluftquellen sein, die einen konstanten Druck oder eine konstante Luftmenge erzeugen.

Mittels einer Steuereinheit 80, die im Folgenden auch als Steuerung bezeichnet wird, sind sämtliche Ventile 11 bis 16, 18 und 21 bis 26 steuerbar. Bei Bedarf können mit der Steuerung 80 auch die Ventile 71 und 72 angesteuert werden. Die Steuereinheit 80 kann sowohl zum Steuern als auch zum Regeln benutzt werden.

Im Folgenden wird die Betriebsweise des Zwischenbehälters 2 weiter erläutert. Es wird angenommen, dass der Zwischenbehälter 2 anfänglich frei von Pulver ist. In einem ersten Schritt werden die Ventile 11, 21, 22, 24 und 27 geschlossen, sodass weder Pulver in den Zwischenbehälter 2 gelangt, noch dass Pulver aus dem Zwischenbehälter 2 heraustransportiert wird. Nun werden das Ventil 23 und das Vakuumventil 25 geöffnet, um im Zwischenbehälter 2 einen Unterdruck zu erzeugen. Sobald das Ventil 21 beziehungsweise 27 für Frischpulver FP oder das Ventil 22 für rezykliertes Pulver RP geöffnet wird, wird Pulver in den Zwischenbehälter 2 gesaugt. Es braucht nicht abgewartet zu werden bis ein Unterdruck im Zwischenbehälter 2 aufgebaut ist, sondern das Pulvereinlassventil 21, 22 beziehungsweise 27 kann bereits vorher geöffnet werden. Wenn sich im Zwischenbehälter 2 ausreichend Pulver angesammelt hat, wird das Ventil 21 beziehungsweise 27 für Frischpulver FP beziehungsweise das Ventil 22 für rezykliertes Pulver RP wieder geschlossen. Hierfür kann das Ventil 21, 22 beziehungsweise 27 für eine bestimmte Zeitdauer geöffnet sein, zum Beispiel für 6 Sekunden. Anschliessend wird das Auslassventil 11 geöffnet, sodass das Pulver aus dem Zwischenbehälter 2 heraus gelangen kann. Dies kann unter Ausnutzung der Schwerkraft geschehen. Um den Pulvertransport aus dem Zwischenbehälter 2 zu unterstützen, kann über den Anschluss 2.1 Druckluft in den Zwischenbehälter 2 geblasen werden. Dazu wird das Ventil 24 geöffnet. Da der Arbeitsbehälter 1 während des Förderbetriebs dauerhaft unter Druck steht, ist es von Vorteil, wenn der Druck im Zwischenbehälter 2 grösser oder zumindest genauso gross ist wie der Druck im Arbeitsbehälter 1. Zum Einstellen des Drucks kann ein Druckregelventil 34 verwendet werden. Sobald das Pulver aus dem Zwischenbehälter 2 herausgelangt ist, werden die Ventile 11 und 24 wieder geschlossen. Anschliessend kann der Zwischenbehälter 2 erneut auf die oben beschriebene Weise mit Pulver befüllt werden.

Der Druck im Zwischenbehälter 2 kann auch direkt im Zwischenbehälter 2 gemessen werden. Dadurch wird der tatsächlich im Zwischenbehälter 2 herrschende Ist-Druck erfasst. Mittels einer entsprechenden Druckregelung, die zum Beispiel in der Steuerung 80 implementiert sein kann, kann nun sichergestellt werden, dass der Ist-Druck im Zwischenbehälter 2 tatsächlich dem gewünschten Soll-Druck entspricht. Wenn der Druck im Zwischenbehälter 2 gleich gross ist wie der Druck im Arbeitsbehälter 1, entsteht beim Öffnen des Ventils 11 kein Druckabfall im Arbeitsbehälter 1. Dadurch wird auch während der Zeit, in der der Arbeitsbehälter 1 mit Pulver befüllt wird, eine gleichmässige Pulverförderung zum Pulverapplikator 4 beziehungsweise zu den Pulverapplikatoren gewährleistet.

Im Folgenden wird die Betriebsweise des Arbeitsbehälters 1 weiter erläutert. Sobald das Pulverventil 11 geöffnet ist, gelangt das Pulver aus dem Zwischenbehälter 2 heraus und in den Arbeitsbehälter 1. Das Pulver fällt auf das Sieb 9, wird gesiebt und rieselt von dort auf die Fluidisiereinheit 19. Um das Pulver aus dem Arbeitsbehälter 1 heraus zum Pulverapplikator 4 zu transportieren, wird das Ventil 18 geöffnet, sodass Transportluft TL in die Pulverleitung 40 strömt. Dabei ist es von Vorteil, wenn das Ventil 18 dauerhaft geöffnet ist, sodass die Transportluft TL kontinuierlich in die Pulverleitung 40 strömen kann. Sobald das Pulverauslassventil 13 geöffnet wird, sorgt der im Arbeitsbehälter 1 herrschende Überdruck dafür, dass das Pulver aus dem Arbeitsbehälter 1 heraus und über die Pulverleitung 40 zum Pulverapplikator 4 gefördert wird. Dieser Zustand wird auch als Pulver-Auslassphase A am Arbeitsbehälter 1 bezeichnet. Während das Pulver aus dem Arbeitsbehälter 1 herausgefördert wird, ist das Ventil 14 geschlossen. Wenn es während der Auslassphase A allerdings zu einer Störung im Arbeitsbehälter 1 kommt, beispielsweise wenn der Druck im Arbeitsbehälter 1 über ein bestimmtes Mass steigt, können das Ventil 12 und/oder die Ventile 11 und 22 geöffnet werden.

Um die pro Zeiteinheit zu fördernde Pulvermenge Q einzustellen, ist vorgesehen, das Pulver-Auslassventil 13 zeitweilig zu schliessen beziehungsweise für eine bestimmte Zeitdauer zu öffnen. Wie lange das Auslassventil 13 geöffnet beziehungsweise geschlossen bleibt, kann durch die Steuerung 80 vorgegeben werden.

Die Steuerung 80 kann zum Beispiel ein pulsweitenmoduliertes Steuersignal S erzeugen, das zwischen zwei Werten (Auf oder Zu beziehungsweise 0 oder 1) wechselt. Dabei wird bei konstanter Frequenz F = 1/TPWM der Tastgrad Tein/TPWM des Steuerpulses moduliert. Hierbei ist TPWM die Periode des Steuersignals S und Tein die Breite des Steuerpulses. Über den Tastgrad beziehungsweise die Pulsbreite Tein kann die pro Zeiteinheit zu fördernde Pulvermenge Q eingestellt werden. Dabei gilt, je kleiner der Tastgrad ist, desto niedriger ist die pro Zeiteinheit zu fördernde Pulvermenge Q. Ist der Tastgrad Tein/TPWM = 0, wird kein Pulver gefördert. Bei einem Tastgrad Tein/TPWM = 1 ist die maximal zu fördernde Pulvermenge Q erreicht.

In Figur 3a ist beispielhaft ein pulsweitenmoduliertes Steuersignal S über der Zeit t dargestellt. Dabei entspricht S = 1 der Ventilstellung "Auf" beim Auslassventil 13. Das Auslassventil 13 ist also für die Zeitdauer Tein geöffnet, sodass für die Zeitdauer Tein Pulver durch das Auslassventil 13 strömen kann. Figur 3b zeigt den zeitlichen Verlauf des Luftdrucks p(TL) der Transportluft TL. Im vorliegenden Beispiel ist p(TL) konstant. Figur 3c schliesslich zeigt in einem Beispieldiagramm die pro Zeit geförderte Pulvermenge Q am Auslass 40.2 der Pulverleitung 40. Dabei ist zu erkennen, dass - auch wenn das Auslassventil 13 zeitweilig geschlossen ist - trotzdem Pulver gefördert wird. Der Grund hierfür liegt darin, dass die Zeiten, in denen das Auslassventil 13 geschlossen ist, kurz genug sind und sich die Transportluft TL in der Pulverleitung 40 im Laufe der Zeit mit dem Pulver vermischt. Dass der Pulverstrom im Einlassbereich 40.1 der Pulverleitung 40 immer wieder durch das Auslassventil 13 unterbrochen wurde, ist am Auslass 40.2 nicht mehr feststellbar. Am Auslass 40.2 der Pulverleitung 40 steht ein homogenes Pulver-Luftgemisch zur Verfügung.

Bei einer bevorzugten und getesteten Ausführungsform kann die zu fördernde Pulvermenge zwischen 30 bis 2000 g/min eingestellt werden. Es kann die Pulverfördervorrichtung 100 aber auch so angepasst werden, dass Pulvermengen von 10 bis 5000 g/min gefördert werden können.
Bei einer getesteten Ausführungsform konnte das Pulver über eine Distanz zwischen 5 bis 30m gefördert werden. Die Pulverfördervorrichtung 100 kann aber auch so angepasst werden, dass das Pulver über Distanzen von 1m bis 50m gefördert werden kann.
Es können dazu Pulverleitungen 40 mit einem Innendurchmesser von 3 bis 30 mm eingesetzt werden. Bei der getesteten Ausführungsform wurden verschiedene Schläuche mit Innendurchmessern zwischen 8 und 12 mm verwendet. Man kann aber auch Standardschläuche mit einem Innendurchmesser von 6 bis 14 mm benutzen. Der Innendurchmesser der Pulverleitung 40 wird anhand der zu fördernden Pulvermenge ausgewählt. Bei kleineren Pulvermengen genügt in der Regel eine Pulverleitung mit einem kleineren Innendurchmesser. Die Transportluft TL kann in einem Bereich von 0.1 bis 50 Nm3/h (Normkubikmeter pro Stunde) beziehungsweise 0.5 bis 6 Nm3/h eingestellt werden, Die Transportluft TL kann in einem Druckbereich von 0.1 bis 10 bar eingestellt werden. Der Innendurchmesser der Quetsche liegt vorzugsweise in einem Bereich von 3 bis 10 mm, noch besser zwischen 3 bis 5 mm. Die Gesamtzykluszeit liegt vorzugsweise in einem Bereich von 100 bis 300 ms. Die Pulsweite kann vorzugsweise in einem Bereich von 5 bis 90 beziehungsweise 290 ms eingestellt werden.

Über den Druck p(TL) der Transportluft TL kann die Strömungsgeschwindigkeit des Pulverstroms eingestellt werden. Je höher der Transportluftdruck p(TL) ist, desto schneller strömt das Pulver durch die Pulverleitung 40 und desto schneller breitet sich die vom Pulverapplikator 4 erzeugte Pulverwolke aus. Eine schnelle Pulverwolke ist von Vorteil, wenn sie weit in das Werkstück eindringen soll. Dies ist zum Beispiel für ein Werkstück mit einer grossen Vertiefung hilfreich. Ist das Werkstück hingegen relativ flach, wird eher eine weiche und damit langsame Pulverwolke verwendet. Damit kann über die Strömungsgeschwindigkeit des Pulvers die Pulverwolke ideal an die Geometrie des zu beschichtenden Werkstücks angepasst werden. Zudem kann die Strömungsgeschwindigkeit an die jeweils verwendete Pulversorte (Korngrösse, Adhäsion, usw.) angepasst werden. Dies führt insgesamt zu einem optimierten Auftragswirkungsgrad. Es kann sichergestellt werden, dass über längere Zeit gleichbleibend, das heisst prozesssicher, reproduzierbar und verschleissarm Pulver gefördert werden kann. Es können organische Pulversorten und auch anorganische Pulversorten, wie zum Beispiel Email, gefördert werden.

Anstelle eines pulsweitenmodulierten Steuersignals S kann auch ein pulsfrequenz- oder pulsdichtemoduliertes Steuersignal S benutzt werden. Beim pulsfrequenzmodulierten Steuersignal S ist die Pulsbreite Tein der einzelnen Pulse zeitlich konstant. Je niedriger die Pulsdichte ist, desto niedriger ist die pro Zeiteinheit geförderte Pulvermenge Q. Ist die Pulsdichte 1, ist die maximal zu fördernde Pulvermenge Q erreicht.

Grundsätzlich werden pulscodierte Steuersignale S benutzt, um die zu fördernde Pulvermenge Q einzustellen. Der Begriff pulscodiert soll hier verstanden werden als Umsetzung eines beliebigen Zahlenwertes in eine binäre Pulsfolge.

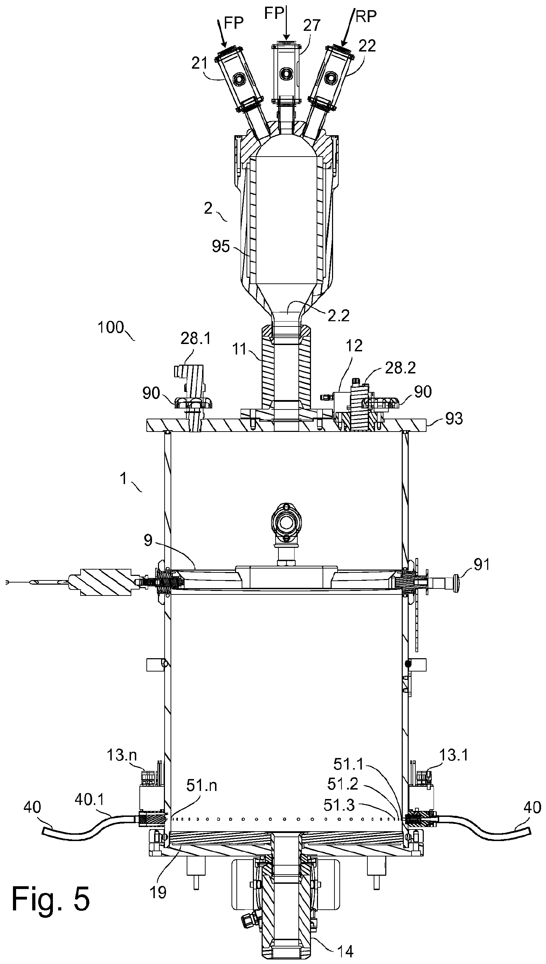

Figur 4 zeigt eine weitere mögliche Ausführungsform der erfindungsgemässen Pulverfördervorrichtung 100 in einer dreidimensionalen Ansicht. Figur 5 zeigt die weitere Ausführungsform der erfindungsgemässen Pulverfördervorrichtung 100 im Längsschnitt. Bei dieser Ausführungsform weist der Arbeitsbehälter 1 n Pulverauslässe 51.1 - 51.n auf, wobei jeder der Pulverauslässe 51.1 - 51.n mit jeweils einem Pulverauslassventil 13.1 bis 13.n verbunden ist. An jedes der Pulverauslassventile 13.1 bis 13.n kann jeweils eine Pulverleitung 40 und ein Pulverapplikator angeschlossen sein. Die Steuerung 80 kann so ausgebildet sein, dass mit ihr jedes der Pulverauslassventile 13.1 bis 13.n separat angesteuert werden kann. Damit wird ein hoher Grad an Flexibilität erreicht. So kann zum Beispiel der Applikator, der mit dem Pulverauslassventil 13.1 verbunden ist, abgeschaltet sein, indem das Pulverauslassventil 13.1 dauerhaft geschlossen bleibt, während derjenige Applikator, der mit dem Pulverauslassventil 13.2 verbunden ist, eingeschaltet wird, indem das Pulverauslassventil 13 entsprechend angesteuert wird. Zudem besteht die Möglichkeit die einzelnen Applikatoren mit unterschiedlich viel Pulver zu versorgen, indem die jeweiligen Auslassventile 13 entsprechend unterschiedlich angesteuert werden. Darüber hinaus können die einzelnen Applikatoren auch jeweils unterschiedlich schnelle Pulverwolken erzeugen, indem die Ventile 18 für die Transportluft TL auf entsprechend unterschiedliche Transportluftmengen eingestellt werden. Es ist auch möglich unterschiedlich lange Pulverleitungen 40 einzusetzen, wobei die Längenunterschiede zwischen den Pulverleitungen durch eine entsprechende, individuelle Ansteuerung der Auslassventile 13 kompensiert werden können.

Um das Sieb 9 reinigen zu können, kann es aus der horizontalen Arbeitsposition (siehe Figur 5) und in eine Schräglage geschwenkt werden (in den Figuren nicht gezeigt). Hierfür ist am Arbeitsbehälter 1 ein Kippmechanismus 91 vorgesehen. Um den Deckel des Arbeitsbehälters 1 öffnen zu können, ist ein Verschluss 90 vorgesehen. Dieser kann zum Beispiel als Schraub- oder Klemmmechanismus ausgebildet sein. Im unteren Bereich des Arbeitsbehälters 1 können ein oder mehrere Sichtfenster 92 angeordnet sein. Es kann vorgesehen sein, dass sich im Arbeitsbehälter 1 auf der gegenüberliegenden Seite des Sichtfensters 92 ein weiteres Sichtfenster und eine Lichtquelle befinden. Damit ist es möglich, den Pulverstand im Arbeitsbehälter 1 während des Betriebs visuell zu erfassen, ohne den Arbeitsbehälter 1 öffnen zu müssen. Die visuelle Erfassung kann mittels Sensoren oder durch das Bedienpersonal erfolgen.

Bei einer Ausführungsform ist im Bereich der oberen Kammer am Arbeitsbehälter 1 ein kapazitiver Sensor 28.2 angeordnet. Der Sensor 28.2 kann zum Beispiel am Deckel 93 des Arbeitsbehälter 1 angeordnet sein. Mit ihm kann der Füllstand in der oberen Kammer des Arbeitsbehälters 1 detektiert, zur Steuerung 80 übermittelt und dort ausgewertet werden. Die Steuerung 80 kann so ermitteln, ob genügend Pulver durch das Sieb 9 rieselt, oder ob das Sieb 9 verstopft ist. Gegebenenfalls kann die Steuerung 80 entsprechend darauf reagieren, zum Beispiel mit einem Warnhinweis für das Bedienpersonal.

Bei einer weiteren Ausführungsform ist unterhalb des Siebs ein weiterer kapazitiver Sensor 28.3 angeordnet. Mit ihm kann der Füllstand in der oberen Kammer des Arbeitsbehälters 1 detektiert und zur Steuerung 80 übermittelt werden. Die Steuerung 80 kann das Sensorsignal auswerten und ist dadurch in der Lage zu ermitteln, ob sich zu viel Pulver oder zu wenig Pulver in der oberen Kammer befindet und kann darauf reagieren, indem sie zum Beispiel einen Warnhinweis für das Bedienpersonal ausgibt. Bei einer weiteren Ausführungsform ist im Bereich der unteren Kammer am Arbeitsbehälter 1 ein kapazitiver Sensor 28.4 angeordnet.

Statt der kapazitiven Sensoren 28.3 und 28.4 können auch andere Sensoren verwendet werden, wenn sie zur Messung des Füllstands geeignet sind.

Bei einer weiteren Ausführungsform ist im Bereich vom Sensor 28.3 bis zum Deckel 93 des Arbeitsbehälters 1 ein Anschluss 35.1 vorgesehen, also im nicht fluidisierten Bereich. Zwischen dem Boden des Arbeitsbehälters 1 und dem Sensor 28.4 ist ein Anschluss 35.2 vorgesehen, sodass der Anschluss 35.2 sich immer im fluidisierten Bereich befindet. An die beiden Anschlüsse 35.1 und 35.2 ist ein Differenzdrucksensor 35 zur Erfassung der Differenz zwischen dem Druck in der oberen und dem Druck in der unteren Kammer anschliessbar. Das vom Differenzdrucksensor 35 erzeugte Differenzdrucksignal kann an die Steuerung 80 übermittelt werden. Aus dem Differenzdruck kann die Steuerung 80 die exakte Füllstandhöhe ermitteln.

Mit Hilfe der beiden kapazitiven Sensoren 28.3 und 28.4 kann die Füllstandshöhe in der unteren Kammer des Arbeitsbehälters 1 kalibriert werden. Es können für jedes Pulverauslassventil 13.1 bis 13.n durch mehrere Referenzmessungen mit unterschiedlichen Einstellungen die Pulverausstossmengen ermittelt werden. Es können dadurch auch während des Betriebs Füllstandsmessungen durchgeführt werden. Dazu wird für eine bestimmte Zeitdauer verhindert, dass Pulver vom Zwischenbehälter 2 in den Arbeitsbehälter 1 gelangt. Dann wird die gesamte Pulvermenge ermittelt, die von den verwendeten Pulverauslassventilen 13.1 bis 13.x in einem bestimmten Zeitraum gefördert wurde. Anschliessend wird von der Steuerung 80 überprüft, ob die Gesamtpulvermenge innerhalb einer bestimmten Bandbreite liegt. Falls dies nicht der Fall ist, kann die Steuerung 80 einen Hinweis ausgeben. Hierzu wird auf das aus dem Patent EP 1092958 B1 bekannte Verfahren zur Bestimmung einer Pulvermenge oder Pulvermengenänderung in einem Behälter verwiesen. Deren Inhalt wird hiermit in die Anmeldung aufgenommen.

Figur 5 zeigt eine mögliche Ausführungsform des Zwischenbehälters 2 in einem Längsschnitt. Im Inneren des Zwischenbehälters 2 befindet sich eine semipermeable Wand 95, die für Luft durchlässig, für Pulver hingegen undurchlässig ist. Über den Anschluss 2.1 und das daran angeschlossene Ventil 24 kann, wie bereits beschrieben, Luft aus dem Zwischenbehälter 2 herausgesaugt und ein Unterdruck erzeugt werden. Die semipermeable Wand 95 sorgt dafür, dass das in den Zwischenbehälter 2 gesaugte Pulver nicht über den Anschluss 2.1 abgesaugt werden kann. Wird durch das Ventil 24 und den Anschluss 2.1 Druckluft in den Zwischenbehälter 2 gepresst, kann diese durch die semipermeable Wand 95 hindurchströmen und im Zwischenbehälter 2 einen Überdruck erzeugen. Wenn das Ventil 11 geöffnet ist, kann die Druckluft auch dazu benutzt werden, um die Wand 95 von dort abgelagertem Pulver zu befreien.

Figur 6 zeigt eine mögliche Ausführungsform des PulverAuslassventils 13 im Schnitt. Das Auslassventil 13 umfasst einen Ventilkörper 96 und einen Einlasskörper 101, beide können mit Schrauben 102 am Arbeitsbehälter 1 befestigt sein. In der in Figur 6 gezeigten Ausführungsform ist der Ventilkörper 96 in eine entsprechend ausgebildete Aufnahme 1.1 am Arbeitsbehälter 1 eingesetzt. Damit der Kanal im Arbeitsbehälter 1 für den Pulverauslass 51.1 möglichst kurz ist, ist die Aufnahme 1.1, wie in Figur 6 gezeigt, in den Arbeitsbehälter 1 versenkt und als Sackloch ausgebildet. Dies muss jedoch nicht zwingend so sein. Der stromaufwärtige Endabschnitt 97.1 der Quetsche 97 kann ebenfalls in der Aufnahme 1.1 platziert sein. Dies hat den Vorteil, dass damit die Quetsche 97 richtig positioniert ist. Auch dies muss jedoch nicht zwingend so sein.

Das Ventil 13 umfasst zudem einen Ventil-Steueranschlussblock 99, der zum Beispiel als elektropneumatisches Schnellschaltventil ausgebildet sein kann. Dieses hat vorteilhafterweise eine kurze Schaltzeit und eine kurze Reaktionszeit. Der Ventil-Steueranschlussblock 99 ist über ein nicht gezeigtes elektrisches Steuerkabel mit dem entsprechenden Steuerausgang der Steuerung 80 verbunden. Die Steuerung 80 kann damit über das Steuersignal S veranlassen, dass das Ventil 13 geöffnet oder geschlossen wird. Im Inneren des Ventilkörpers 96 befindet sich eine Schlauchquetsche 97, deren Durchlass - abhängig vom Druckluft-Steuersignal S - entweder offen oder verschlossen ist. Im druckluftfreien Zustand ist die Schlauchquetsche 97 entspannt und ihr Durchlass geöffnet. Die Aussenseite der Schlauchquetsche 97 liegt dann an der Innenseite des Rings 98 an. Der Ring 98 sorgt dafür, dass - unabhängig davon welcher Druck im Arbeitsbehälter 1 herrscht - die Öffnungsweite der Schlauchquetsche 97 im druckluftfreien Zustand gleich bleibt und definiert ist. Damit wird eine reproduzierbare Öffnungsweite des Ventils 13 gewährleistet. Der Ring 98 kann zum Beispiel aus Kunststoff hergestellt sein. Dieser Aufbau hat den Vorteil, dass der Druck im Arbeitsbehälter 1 hilft die Schlauchquetsche 97 zu öffnen. Bei einem Pulverförderer, der die Quetsche auch bei Unterdruck öffnen muss, kann dies mit der Zeit zu Problemen führen.

Zur Steuerung des Ventils 13 ist ein Steuerventil vorgesehen, das im Steueranschlussblock 99 angeordnet ist. Vorteilhafter Weise wird als Steuerventil im Steueranschlussblock 99 ein sogenanntes Normally Open Ventil eingesetzt. Bei einem Ausfall der Steuerung 80, wenn also kein Steuersignal S am Steuerventil anliegt, ist das Normally Open Ventil geöffnet, sodass die Quetsche 97 des Ventils 13 verschlossen ist.

Wenn sich der Einlass 17 unmittelbar an das Ventil 13 anschliesst, hat dies den Vorteil, dass die zugeführte Transportluft TL sich im Wesentlichen über die gesamt Länge der Pulverleitung 40 mit dem geförderten Pulver vermischen kann. Eine solche Anordnung ist jedoch nicht zwingend erforderlich. Der Einlass 17 kann sich auch etwas weiter stromabwärts an der Pulverleitung 40 befinden.

Es ist des Weiteren von Vorteil, wenn die Transportluft TL in einem flachen Winkel α ringförmig in die Pulverleitung 40 strömt. Mit der in Figur 6 gezeigten Ausführungsform ist dies möglich. Der Einlasskörper 101 mit dem Einlass 17 für die Transportluft TL weist einen axial verlaufenden Luftkanal 32 auf, der den stromabwärtigen Endbereich des Pulverkanals 96.2 des Ventilkörpers 96 ringförmig umgibt. Der Einlasskörper 101 kann in seinem stromabwärtigen Endbereich aussen als Schlauchnippel 33 ausgebildet sein. Die Pulverleitung 40 beziehungsweise der Pulverschlauch kann auf den Schlauchnippel 33 geschoben und befestigt werden. Es ist hier auch eine Schlauchkupplung, zum Beispiel mit eine Schnappverbindung, vorstellbar (in den Figuren nicht gezeigt). Die Innenseite des Schlauchnippels 33 und die Aussenseite des Pulverkanals 96.2 bilden einen ringförmigen Transportluftkanal 32. Das stromabwärtige Ende des Schlauchnippels 33 und des Pulverkanals 96.2 bilden einen Ringspalt 94, der als stromabwärtige Öffnung des Transportluftkanals 32 dient. Zur Versorgung des Transportluftkanals 32 ist eine Querbohrung im Einlasskörper 101 vorgesehen. Die Transportluft TL strömt durch den Transportluftkanal 32 zu dessen stromabwärtigen Ende und von dort ringförmig und in einem flachen Winkel α in die Pulverleitung 40.

Die Transportluft TL mittels des Ringspalts 94 in die Pulverleitung 40 einströmen zu lassen, hat mehrere Vorteile. Weil die Transportluft TL durch den Ringspalt 94 so in die Pulverleitung 40 eingeleitet wird, dass sie die gleiche Richtung wie der Hauptstrom aufweist, wird am Einlass 17 eher ein Unterdruck erzeugt als ein Staudruck (kein Luftwiderstand, keine Barriere). Dadurch entstehen weniger Turbulenzen in der Pulverleitung 40. Zudem lässt sich der Verschleiss an der Wandung der Pulverleitung 40 reduzieren oder sogar gänzlich vermeiden.

Es sind auch andere Ausführungsformen für den Einlasskörper 101 möglich. Der Einlasskörper 101 kann zum Beispiel einen oder mehrere Kanäle aufweisen, über die die Transportluft TL in einem Winkel zwischen 0 und 89 Grad in die Pulverleitung 40 eingeleitet wird. Die durch die Kanäle strömende Transportluft TL erzeugt eher einen Unterdruck in der Pulverleitung 40.

Es ist auch möglich den Einlasskörper 101 so auszubilden, dass die Transportluft TL in einem 90 Grad Winkel oder grösser 90 Grad in die Pulverleitung 40 einströmt.

Der Einlasskörper 101 kann auch so ausgebildet sein, dass die Transportluft TL über ein Filterrohr aus mikroporösem Material in die Pulverleitung 40 einströmt.

Auch kann vorgesehen sein, dass das Ventil 18 für die Transportluft TL während der Auslassphase A kurzzeitig geschlossen wird, sodass kurzzeitig keine Transportluft TL in die Pulverleitung 40 eingeleitet wird. Dadurch wird der Einfluss der Transportluft TL auf die geförderte Pulvermenge Q noch weiter reduziert.

Bei Bedarf kann der Pulverkanal 96.2 des Ventilkörpers 96 auf der stromabwärtigen Seite des Ventils 13 konisch ausgebildet sein.

Die Pulverleitung 40 kann ganz oder teilweise als Schlauch ausgebildet sein.

Die Pulverbeschichtungsanlage kann, wie in Figur 1 gezeigt, zusätzlich zur Pulverfördervorrichtung 100 und der Beschichtungskabine 6 auch noch einen Zyklon 7 zur Rückgewinnung des Pulvers und ein Nachfilter 8 aufweisen.

Um das Overspray aus der Beschichtungskabine 6 zu entfernen, wird es zusammen mit der in der Beschichtungskabine 6 befindlichen Luft als Pulver-Luftgemisch aus der Kabine gesaugt und dem Zyklon 7 zugeführt, der als Monozyklon ausgebildet sein kann. Das Pulver-Luftgemisch strömt oben tangential in den Zyklon 7 und im Zyklon spiralförmig nach unten. Durch die bei der Rotation des Pulver-Luftstroms entstehende Zentrifugalkraft werden die Pulverpartikel nach aussen an die Aussenwand des Zyklons gedrückt. Anschliessend werden die Pulverpartikel nach unten in Richtung des Pulverauslasses des Zyklons gefördert und dort gesammelt. Die von den Pulverpartikeln befreite Luft wird über ein im Zyklon befindliches Zentralrohr abgesaugt. Der so gereinigte Luftstrom kann noch dem Nachfilter 8 zugeführt werden, um auch noch das in der Luft verbliebene restliche Pulver herauszufiltern. Wenn das Ventil 71 geöffnet ist, kann das rezyklierte Pulver RP aus dem Zyklon 7 entnommen und über eine Pumpe 73 und eine Leitung 41 wieder der Pulverfördervorrichtung 100 zugeführt werden. Wenn das Ventil 72 geöffnet ist, kann das im Zyklon herausgefilterte Pulver dessen auch über die Leitungen 45 und 44 dem Nachfilter 8 zugeführt werden.

Der Nachfilter 8 kann mit Filterpatronen ausgestattet sein, die die restlichen in der Luft verbliebenen Pulverpartikel herausfiltern. Ein vorzugsweise elektrisch angetriebener Ventilator oder ein Gebläse sorgt für den notwendigen Luftdurchsatz.

Wenn kein Zyklon 7 verwendet wird, kann auch das Pulver aus dem Nachfilter 8 entnommen und über die Pumpe 73 und die Leitung 41 wieder der Pulverfördervorrichtung 100 zugeführt werden.

Die vorhergehende Beschreibung der Ausführungsbeispiele gemäss der vorliegenden Erfindung dient nur zu illustrativen Zwecken. Im Rahmen der Erfindung sind verschiedene Änderungen und Modifikationen möglich. So sind beispielsweise die verschiedenen in den Figuren 1 bis 6 gezeigten Komponenten der Fördervorrichtung auch auf eine andere als in den Figuren gezeigte Weise miteinander kombinierbar.

### Bezugszeichenliste

- 1: Arbeitsbehälter
- 1.1: Aufnahme
- 1.2: Entlüftungsanschluss
- 1.3: Reinigungsanschluss
- 2: Zwischenbehälter
- 2.1: Anschluss am Zwischenbehälter
- 2.2: Pulverauslass des Zwischenbehälters
- 3: Vorratsbehälter
- 4: Applikator
- 5: Applikator
- 6: Beschichtungskabine
- 7: Zyklonabscheider
- 8: Nachfilter
- 9: Ultraschallsieb
- 10: Werkstück
- 11: Ventil
- 12: Entlüftungsventil
- 13: Auslassventil
- 13.1 -13.n: Auslassventile
- 14: Ventil
- 15: Ventil
- 16: Ventil
- 17: Einlass für Transportluft
- 17.1 - 17.n: Einlässe für Transportluft
- 18: Dosiereinrichtung für die Transportluft
- 19: Fluidisiereinrichtung
- 20: Rüttelvorrichtung
- 21: Ventil für Frischpulver
- 22: Ventil
- 23: Ventil
- 24: Ventil
- 25: Vakuum-Ventil oder Unterdruckerzeuger
- 26: Ventil
- 27: Ventil für Frischpulver
- 28: Sensor
- 28.1: Drucksensor
- 28.2: Sensor
- 28.3: Sensor
- 28.4: Sensor
- 29: Sensor
- 30: Vorratsbehälter
- 31: Pumpe
- 32: Transportluftkanal
- 33: Schlauchnippel
- 34: Druckregelventil
- 35: Differenzdrucksensor
- 35.1: Anschluss für Differenzdrucksensor
- 35.2: Anschluss für Differenzdrucksensor
- 40: Pulverleitung
- 40.1: erstes Ende der Pulverleitung
- 40.2: zweites Ende der Pulverleitung
- 41: Leitung
- 42: Leitung
- 43: Leitung
- 44: Leitung
- 45: Leitung
- 46: Leitung
- 47: Leitung
- 50: Pulvereinlass
- 51.1 - 51.n: Pulverauslässe
- 71: Ventil
- 72: Ventil
- 73: Pumpe
- 80: Steuerung
- 90: Verschluss
- 91: Kippmechanismus
- 92: Sichtfenster
- 93: Deckel des Arbeitsbehälters
- 94: Ringspalt
- 95: semipermeable Wand
- 96: Ventilkörper
- 96.2: Pulverkanal
- 97: Schlauchquetsche
- 97.1: Endabschnitt der Schlauchquetsche
- 98: Ring
- 99: Ventil-Steueranschlussblock
- 100: Pulverfördervorrichtung
- 101: Einlasskörper
- 102: Schraube
- A: Auslassphase
- FL: Fluidisierluft
- F: Förderphase
- FP: Frischpulver
- H: Horizontale
- Q: Pulvermenge pro Zeiteinheit
- RP: rezykliertes Pulver
- S: Steuersignal
- TL: Transportluft
- t: Zeit
- T: Zeitdauer
- α: Winkel

## Patentansprüche

1. Pulverfördervorrichtung zum Fördern von Beschichtungspulver zu einem Pulverapplikator,
- bei der ein Arbeitsbehälter (1) vorgesehen ist, der so ausgebildet und betreibbar ist, dass er unter Druck setzbar ist, und der einen Pulvereinlass (50) und einen Pulverauslass (51.1) aufweist,
- bei der ein Drucksensor (28.1) vorgesehen ist, um den Druck im Arbeitsbehälter (1) zu erfassen,
- bei der der Pulverauslass (51.1) mit einem Pulverauslassventil (13) verbunden ist,
- bei der eine Pulverleitung (40) vorgesehen ist, die eingangsseitig mit dem Pulverauslassventil (13) verbunden ist, und die eingangsseitig einen Einlass (17) für Transportluft (TL) aufweist,
- bei der die Pulverleitung (40) ausgangsseitig mit einem Pulverapplikator (4; 5) verbindbar ist, und
- bei der eine Steuerung (80) vorgesehen ist, die derart ausgebildet und betreibbar ist, dass sie den Druck im Arbeitsbehälter (1) regelt, und dass sie die zu fördernde Pulvermenge (Q) steuert, indem sie das Pulverauslassventil (13) mittels eines pulscodierten Steuersignals (S) wiederholt öffnet und schliesst.

2. Pulverfördervorrichtung nach Patentanspruch 1,
bei der die Steuerung (80) derart ausgebildet und betreibbar ist, dass sie zur Steuerung der zu fördernden Pulvermenge (Q) das Pulverauslassventil (13) mittels einer Pulsweitenmodulation oder einer Pulsfrequenzmodulation ansteuert.

3. Pulverfördervorrichtung nach einem der vorherigen Patentansprüche,
bei der der Einlass (17) für Transportluft (TL) unmittelbar nach dem Pulverauslassventil (13) vorgesehen ist.

4. Pulverfördervorrichtung nach einem der vorherigen Patentansprüche,
bei der der Einlass (17) für Transportluft (TL) als Ringspalt (94) ausgebildet ist.

5. Pulverfördervorrichtung nach einem der vorherigen Patentansprüche,
bei der der Einlass (17) für Transportluft (TL) so ausgebildet ist, dass die Transportluft (TL) in einem spitzen Winkel (α) in die Pulverleitung (40) einblasbar ist.

6. Pulverfördervorrichtung nach einem der vorherigen Patentansprüche,
bei der die eine Dosiereinrichtung (18) für die Transportluft (TL) vorgesehen ist.

7. Pulverfördervorrichtung nach einem der vorherigen Patentansprüche,
bei der im Arbeitsbehälter (1) eine Fluidisiereinrichtung (19) vorgesehen ist.

8. Pulverfördervorrichtung nach einem der vorherigen Patentansprüche,
- bei der Arbeitsbehälter (1) einen weiteren Pulverauslass (51.3; 51.n) aufweist, und
- bei der eine weitere Pulverleitung (40) vorgesehen ist, die eingangsseitig mit einem weiteren Pulverauslassventil (13.2; 13.n) und einem weiteren Einlass (17) für Transportluft (TL) verbunden ist, und die ausgangsseitig mit einem weiteren Pulverapplikator (5) verbindbar ist.

9. Pulverfördervorrichtung nach einem der vorherigen Patentansprüche,
- bei der der Arbeitsbehälter (1) ein Entlüftungsventil (12) aufweist, und
- bei der die Steuerung (80) derart ausgebildet und betreibbar ist, dass sie ab einem bestimmten Druck im Arbeitsbehälter (1) das Entlüftungsventil (12) für eine bestimmte Zeitdauer öffnet, indem sie dazu das Entlüftungsventil (12) mittels eines pulscodierten Steuersignals ansteuert.

10. Pulverfördervorrichtung nach einem der vorherigen Patentansprüche,
bei der ein Ultraschallsieb (9) vorgesehen ist, das im Arbeitsbehälter (1) angeordnet ist.

11. Pulverfördervorrichtung nach einem der vorherigen Patentansprüche,
- bei der ein Zwischenbehälter (2) mit einem Pulvereinlass und einem Pulverauslass (2.2) vorgesehen ist,
- bei der der Pulverauslass (2.2) des Zwischenbehälters (2) über ein Ventil (11) mit dem Pulvereinlass (50) des Arbeitsbehälters (1) verbunden ist, und
- bei der ein Unterdruckerzeuger (25) vorgesehen ist, mit dem Pulver (FP; RP) über den Pulvereinlass in den Zwischenbehälter (2) saugbar ist.

12. Pulverfördervorrichtung nach Patentanspruch 11,
bei der eine steuerbare Druckluftquelle (24, 34) vorgesehen ist, die mit dem Zwischenbehälter (2) verbunden ist und mit der der Zwischenbehälter (2) unter Druck setzbar ist.

13. Pulverfördervorrichtung nach einem der vorherigen Patentansprüche,
- bei der der Zwischenbehälter (2) oberhalb des Arbeitsbehälters (2) angeordnet ist.

14. Pulverbeschichtungsanlage mit einer Pulverfördervorrichtung nach einem der vorherigen Patentansprüche, bei der die Pulverfördervorrichtung (100) einerseits mit einem Pulvervorratsbehälter (3; 30) und andererseits mit einer oder mehreren Pulverapplikatoren (4; 5) verbunden ist.

15. Verfahren zum Betreiben einer Pulverfördervorrichtung nach einem der vorherigen Patentansprüche 1 bis 13,
- bei dem die Pulverförderung dadurch erfolgt,
- dass Transportluft (TL) in die Pulverleitung (40) geleitet wird, und
- dass mittels der Steuerung (80) das Auslassventil (13) mittels eines pulscodierten Steuersignals (S) wiederholt geöffnet und geschlossen wird, wobei über das Verhältnis zwischen der Zeitdauer, in der das Auslassventil (13) geschlossen ist und der Zeitdauer, in der das Auslassventil (13) geöffnet ist, die zu fördernde Pulvermenge (Q) eingestellt wird.

16. Verfahren nach Patentanspruch 15,
bei dem die Transportluft (TL) während der Pulverförderung ununterbrochen in die Pulverleitung (40) geleitet wird.

## Claims

1. A powder conveying device for conveying coating powder to a powder applicator,
- in which a working container (1) is provided, which is embodied and operable such that it can be pressurized and has a powder inlet (50) and a powder outlet (51.1),
- in which a pressure sensor (28.1) is provided for detecting the pressure in the working container (1),
- in which the powder outlet (51.1) is connected to a powder outlet valve (13),
- in which a powder line (40) is provided, which is connected on the inlet side to the powder outlet valve (13), and which has, on the inlet side, an inlet (17) for transport air (TL),
- in which the powder line (40) can be connected, on the outlet side, to a powder applicator (4; 5), and
- in which a controller (80) is provided, which is embodied and operable such that it regulates the pressure in the working container (1), and that it controls the amount of powder (Q) to be conveyed, in that it repeatedly opens and closes the powder outlet valve (13).

2. The powder conveying device according to patent claim 1,
in which the controller (80) is embodied and operable such that it controls the powder outlet valve (13) by means of a pulse width modulation or a pulse frequency modulation for controlling the amount of powder (Q) to be conveyed.

3. The powder conveying device according to any one of the preceding patent claims,
in which the inlet (17) for transport air (TL) is provided immediately downstream from the powder outlet valve (13).

4. The powder conveying device according to any one of the preceding patent claims,
in which the inlet (17) for transport air (TL) is embodied as annular gap (94).

5. The powder conveying device according to any one of the preceding patent claims,
in which the inlet (17) for transport air (TL) is embodied such that the transport air (TL) can be blown into the powder line (40) at an acute angle (α) .

6. The powder conveying device according to any one of the preceding patent claims,
in which a metering device (18) is provided for the transport air (TL).

7. The powder conveying device according to any one of the preceding patent claims,
in which a fluidizing device (19) is provided in the working container (1).

8. The powder conveying device according to any one of the preceding patent claims,
- in which the working container (1) has a further powder outlet (51.3; 51.n), and
- in which a further powder line (40) is provided, which is connected, on the inlet side, to a further powder outlet valve (13.2; 13.n) and to a further inlet (17) for transport air (TL), and which can be connected, on the outlet side, to a further powder applicator (5).

9. The powder conveying device according to any one of the preceding patent claims,
- in which the working container (1) has a vent valve (12), and
- in which the controller (80) is embodied and operable such that it opens the vent valve (12) for a certain period of time starting at a certain pressure in the working chamber (1), in that, for this purpose, it controls the vent valve (12) by means of a pulse-coded control signal.

10. The powder conveying device according to any one of the preceding patent claims,
in which an ultrasonic sieve (9) is provided, which is arranged in the working container (1).

11. The powder conveying device according to any one of the preceding patent claims,
- in which an intermediate container (2) comprising a powder inlet and a powder outlet (2.2) is provided,
- in which the powder outlet (2.2) of the intermediate container (2) is connected to the powder inlet (50) of the working container (1) via a valve (11), and
- in which a vacuum generator (25) is provided, by means of which powder (FP; RP) can be aspirated via the powder inlet into the intermediate container (2).

12. The powder conveying device according to patent claim 11,
in which a controllable compressed air source (24, 34) is provided, which is connected to the intermediate container (2) and by means of which the intermediate container (2) can be pressurized.

13. The powder conveying device according to any one of the preceding patent claims,
- in which the intermediate container (2) is arranged above the working container (1).

14. A powder coating system comprising a powder conveying device according to any one of the preceding patent claims,
in which the powder conveying device (100) is connected, on the one hand, to a powder storage container (3; 30) and, on the other hand, to one or a plurality of powder applicators (4; 5).

15. A method for operating a powder conveying device according to any one of the preceding patent claims 1 to 13,
- in which the powder conveyance takes place in
- that transport air (TL) is guided into the powder line (40), and
- that the outlet valve (13) is opened and closed repeatedly by means of the controller (80), wherein the amount of powder (Q) to be conveyed is set via the ratio between the period of time, in which the outlet valve (13) is closed, and the period of time, in which the outlet valve (13) is open.

16. The method according to patent claim 15,
in which the transport air (TL) is guided into the powder line (40) without interruption during the powder conveyance.

## Revendications

1. Dispositif de transport de poudre pour le transport de poudre de revêtement vers un applicateur de poudre,
- dans lequel un récipient de travail (1) qui est réalisé et peut être exploité de sorte qu'il peut être mis sous pression, et qui présente une entrée de poudre (50) et une sortie de poudre (51.1) est prévu,
- dans lequel un capteur de pression (28.1) est prévu pour détecter la pression dans le récipient de travail (1),
- dans lequel la sortie de poudre (51.1) est connectée à une soupape de sortie de poudre (13),
- dans lequel une conduite de poudre (40) qui est connectée côté entrée à la soupape de sortie de poudre (13) et qui présente côté entrée une entrée (17) pour de l'air de transport (TL) est prévue,
- dans lequel la conduite de poudre (40) peut être connectée côté sortie à un applicateur de poudre (4 ; 5), et
- dans lequel une commande (80) qui est réalisée et peut être exploitée de telle sorte qu'elle régule la pression dans le récipient de travail (1) et en ce qu'elle commande la quantité de poudre à transporter (Q) en ce qu'elle ouvre et ferme de manière répétée la soupape de sortie de poudre (13) est prévue.

2. Dispositif de transport de poudre selon la revendication 1,
dans lequel la commande (80) est réalisée et peut être exploitée de telle sorte qu'elle entraîne la soupape de sortie de poudre (13) au moyen d'une modulation d'impulsions en largeur ou d'une modulation d'impulsions en fréquence pour la commande de la quantité de poudre à transporter (Q).

3. Dispositif de transport de poudre selon une des revendications précédentes,
dans lequel l'entrée (17) pour l'air de transport (TL) est directement prévue après la soupape de sortie de poudre (13).

4. Dispositif de transport de poudre selon une des revendications précédentes,
dans lequel l'entrée (17) pour l'air de transport (TL) est réalisée en tant qu'interstice annulaire (94) .

5. Dispositif de transport de poudre selon une des revendications précédentes,
dans lequel l'entrée (17) pour l'air de transport (TL) est réalisée de sorte que l'air de transport (TL) peut être injecté à un angle aigu (α) dans la conduite de poudre (40).

6. Dispositif de transport de poudre selon une des revendications précédentes,
dans lequel un dispositif de dosage (18) est prévu pour l'air de transport (TL).

7. Dispositif de transport de poudre selon une des revendications précédentes,
dans lequel un dispositif de fluidification (19) est prévu dans le récipient de travail (1).

8. Dispositif de transport de poudre selon une des revendications précédentes,
- dans lequel le récipient de travail (1) présente une autre sortie de poudre (51.3 ; 51.n), et
- dans lequel une autre conduite de poudre (40) qui est connectée côté entrée à une autre soupape de sortie de poudre (13.2 ; 13.n) et une autre entrée (17) pour de l'air de transport (TL), et qui peut être connectée côté sortie à un autre applicateur de poudre (5) est prévue.

9. Dispositif de transport de poudre selon une des revendications précédentes,
- dans lequel le récipient de travail (1) présente une soupape de purge (12), et
- dans lequel la commande (80) est réalisée et peut être exploitée de telle sorte qu'elle ouvre la soupape de purge (12) pendant une durée déterminée à partir d'une pression déterminée dans le récipient de travail (1) en ce qu'elle entraîne à cet effet la soupape de purge (12) au moyen d'un signal de commande à codage de modulation d'impulsions.

10. Dispositif de transport de poudre selon une des revendications précédentes,
dans lequel un tamis à ultrasons (9) qui est disposé dans le récipient de travail (1) est prévu.

11. Dispositif de transport de poudre selon une des revendications précédentes,
- dans lequel un récipient intermédiaire (2) avec une entrée de poudre et une sortie de poudre (2.2) est prévu,
- dans lequel la sortie de poudre (2.2) du récipient intermédiaire (2) est connectée à l'entrée de poudre (50) du récipient de travail (1) par le biais d'une soupape (11), et
- dans lequel un générateur de dépression (25) avec lequel de la poudre (FP ; RP) peut être aspirée dans le récipient intermédiaire (2) par le biais de l'entrée de poudre est prévu.

12. Dispositif de transport de poudre selon la revendication 11,
dans lequel une source d'air comprimé (24, 34) pouvant être commandée qui est connectée au récipient intermédiaire (2) et avec laquelle le récipient intermédiaire (2) peut être mis sous pression est prévue.

13. Dispositif de transport de poudre selon une des revendications précédentes,
- dans lequel le récipient intermédiaire (2) est disposé au-dessus du récipient de travail (1).

14. Installation de revêtement par poudre avec un dispositif de transport de poudre selon une des revendications précédentes,
dans laquelle le dispositif de transport de poudre (100) est connecté d'un côté à un récipient de stockage de poudre (3 ; 30) et de l'autre côté à un ou plusieurs applicateurs de poudre (4 ; 5).

15. Procédé d'exploitation d'un dispositif de transport de poudre selon une des revendications précédentes 1 à 13,
- dans lequel le transport de poudre s'effectue en ce
- que de l'air de transport (TL) est dirigé dans la conduite de poudre (40), et
- que la soupape de sortie (13) est ouverte et fermée de manière répétée au moyen de la commande (80), dans lequel la quantité de poudre à transporter (Q) est réglée par le biais du rapport entre la durée au cours de laquelle la soupape de sortie (13) est fermée et la durée au cours de laquelle la soupape de sortie (13) est ouverte.

16. Procédé selon la revendication 15,
dans lequel l'air de transport (TL) est dirigé de manière ininterrompue dans la conduite de poudre (40) pendant le transport de poudre.
